(19) **Europäisches Patentamt**

**European Patent Office**

**Office européen des brevets**

(11) **EP 1 417 634 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(21) Anmeldenummer: **02774290.7**

(22) Anmeldetag: **03.08.2002**

(51) Int Cl.:
***G06K 9/20*** *(2006.01)*

(86) Internationale Anmeldenummer:
**PCT/DE2002/002870**

(87) Internationale Veröffentlichungsnummer:
**WO 2003/017184 (27.02.2003 Gazette 2003/09)**

(54) **VORRICHTUNG UND VERFAHREN ZUR ERKENNUNG OPTISCHER MARKIERUNGEN**

DEVICE AND METHOD FOR RECOGNITION OF OPTICAL MARKERS

DISPOSITIF ET PROCEDE DE DETECTION DE MARQUAGES OPTIQUES

(84) Benannte Vertragsstaaten:
**AT BE BG CH CY CZ DE DK EE ES FI FR GB GR IE IT LI LU MC NL PT SE SK TR**

(30) Priorität: **06.08.2001 DE 10137817**

(43) Veröffentlichungstag der Anmeldung:
**12.05.2004 Patentblatt 2004/20**

(73) Patentinhaber: **Institut für Automation und Kommunikation E.V.**
**Magdeburg**
**39179 Barleben (DE)**

(72) Erfinder:
• **HOYER, Robert**
**39118 Magdeburg (DE)**
• **SCHÖNROCK, René**
**39291 Möckern (DE)**

(74) Vertreter: **Pfenning, Meinig & Partner GbR**
**Patent- und Rechtsanwälte**
**Joachimstaler Strasse 10-12**
**10719 Berlin (DE)**

(56) Entgegenhaltungen:
**DE-A- 19 756 706          DE-A- 19 939 048**

• CAVELLO C ET AL: "Radar retro-reflective patch for vehicle convoying applications" INTELLIGENT TRANSPORTATION SYSTEM, 1997. ITSC '97., IEEE CONFERENCE ON BOSTON, MA, USA 9-12 NOV. 1997, NEW YORK, NY, USA,IEEE, US, 9. November 1997 (1997-11-09), Seiten 667-671, XP010270895 ISBN: 0-7803-4269-0

## Beschreibung

Die Erfindung betrifft ein Verfahren und eine Vorrichtung zur Erkennung von markierten Objekten.

Anwendungsgebiete des Verfahrens und der Vorrichtung sind z.B. die Erkennung, Identifikation und Verfolgung von Gütern bei Lagerung und Umschlag, die Positionserkennung von Personen zur Warnung vor Betreten von gefährlichen Bereichen, die Lageerkennung von Lasten an Kränen, das Folgen von vorausfahrenden Fahrzeugen und die Erkennung von Radfahrern und Fußgängern im Straßenverkehr.

Zur Vermessung von Objekten oder zur Verfolgung von Fahrzeugen sind der Einsatz von Meßmarken in Verbindung mit Bildverarbeitungsverfahren bekannt. In den Veröffentlichungen (Stiller, Lorei: Sensor Systems for Truck Coupling. 6th World Congress on Intelligent Transport Systems 99, Toronto, November 1999, Proceedings)und (Fritz: Longitudinal and Lateral Control of Two Electronically Coupled Heavy-Duty Trucks in the CHAUFFEUR Project. 6th World Congress on Intelligent Transport Systems 99, Toronto, November 1999, Proceedings) wird ein System zur elektronischen Kopplung von Lastkraftwagen beschrieben, welches auf der bildverarbeitungsbasierten Erkennung einer auf dem nachzufahrenden Fahrzeug angebrachten optischen Marke beruht. Das visuelle Muster der Marke, welches einem 2D-Barcode ähnlich ist, hat eine beträchtliche Größe von über 1 x 1 m. Die optische Erfassung der Marke mit einer CCD-Kamera bringt in der Straßenverkehrsumgebung Schwierigkeiten mit sich, wie z.B. die Übersteuerung des CCD-Sensors, die räumlich variierende Beleuchtung (z.B. im Schatten von Brücken) oder einen geringen Kontrast bei starker Sonneneinstrahlung. Die Sichtbarkeit der Marke wird durch entsprechend im Muster angebrachte Infrarot-Lichtemitterdioden verbessert. Für die sichere Erkennung der Marke im gewünschten Entfernungsbereich sind zwei Kameras erforderlich, eine für den Nahbereich und eine für den Fernbereich. Für die Bildverarbeitung in Video-Echtzeit wird eine erhebliche Rechenleistung benötigt.

In weiteren Druckschriften (DE 197 28 513 A1, DE 197 33 466 A1, DE 198 12 609 AI) werden Verfahren vorgestellt, welche mittels Meßmarken und Codemuster eine Identifikation und Lageerkennung von Objekten ermöglichen. Die Verwendung von optischen Codemustern bringt im wesentlichen folgende Nachteile mit sich: Das zu erkennende Codemuster muß auf dem Bildsensor genügend groß abgebildet werden. Eine teilweise Verdeckung des Codemusters erschwert die sichere Identifikation oder läßt sie scheitern. Eine unscharfe Abbildung des Musters auf dem Bildsensor führt zu einer Verschlechterung der Identifikationssicherheit. Die erforderliche Rechenleistung zur Ausführung der Algorithmen für die Codeerkennung in Echtzeit ist erheblich.

Aus der Druckschrift DE 197 56 706 A1 ist bekannt, daß gefährdete Personen und Fahrzeuge mit einem Reflektor markiert werden, der ausschließlich das Licht im Infrarotbereich reflektiert. Diese Reflektoren sollen erkannt werden, indem eine Vorrichtung Licht mit zwei Wellenlängen ausstrahlt und das reflektierte Licht bezüglich Intensität und Intensitätsverteilung untersucht wird. Weiterhin wird hier auf die Möglichkeit einer digitalen Kodierung der abgestrahlten Lichtsignale hingewiesen.

Der technologische Hintergrund der Erfindung wird noch von der Druckschrift DE 41 07 701 A1 berührt. Diese beschreibt eine Vorrichtung und ein Verfahren mit dem die gegenseitige Überstrahlung mehrerer, in verschiedenen Ebenen angeordneter Lichtquellen ausgeschlossen werden soll. Dies wird durch die Beleuchtung der Szene mit verschiedenen Lichtwellenlängen in Verbindung mit einem synchronisierten Filterwechsel vor einer CCD-Kamera erreicht. In einer weiteren Variante werden zwei Lichtquellen alternierend mit dem 50 Hz-Halbbild einer CCD-Kamera angesteuert, so daß in jedem Halbbild die durch nur eine Lichtquelle beleuchtete Szene erscheint. Der Nachteil der Lösung besteht darin, daß bewegte Objekte wegen des relativ großen Zeitabstands zwischen der Halbbildbelichtung versetzt abgebildet werden und damit eine automatische Bildauswertung erheblich erschwert wird.

Der Erfindung liegt die Aufgabe zugrunde, mit passiven retroreflektierenden oder aktiven lichtabstrahlenden optischen Markierungen versehene Objekte über eine Kamera auch bei unscharfer Abbildung der Markierung auf dem Bildsensor oder bei teilweiser Verdeckung mit geringstem algorithmischen und rechentechnischen Aufwand schnell und sicher zu identifizieren sowie die Position der markierten Objekte zu bestimmen. Bei der Erkennung einer aktiven Markierung soll die Vorrichtung mit dem beschriebenen Verfahren neben der Ortsinformation auch ein von der aktiven Markierung ausgesendetes, zeitlich kodiertes Signal empfangen und interpretieren können.

Diese Aufgabe wird durch die Erfindung gemäß dem Ansprüchen 1 und 10 gelöst.

Erfindungsgemäß wird die Aufgabe dadurch gelöst, daß die Vorrichtung Licht mindestens zweier Wellenlängenbereiche aussendet, wobei die Lichtstrahler, welche die verschiedenen Wellenlängenbereiche emittieren, synchron mit dem pixel- oder zeilenweisen Belichten und/oder Auslesen eines Bildsensors angesteuert werden, so daß sich eine als Retroreflektor ausgebildete passive Markierung im Bild als Objekt mit hellen und dunklen Zonen, zweckmäßigerweise Streifen, abzeichnet, wenn das Retroreflexionsvermögen der passiven Markierung in beiden emittierten Lichtwellenlängenbereichen unterschiedlich ist. Diese durch die pixel- oder zeilensynchrone Anstrahlung mit verschiedenen Lichtwellenlängenbereichen erzeugten Muster verringern den algorithmischen Aufwand für eine automatische Erkennung der Markierungen im Bild erheblich. Um zu vermeiden, daß feingliedrige Strukturen nichtmarkierter Objekte zur fehlerhaften Identifikation führen, wird das Objektiv des Bildsensors unscharf eingestellt. Während die natürlichen Strukturen durch dieses erfindungsgemäße Vorgehen verschwimmen bzw. verschwinden, zeichnet sich ein pixel- oder zeilensynchron alternierend mit verschiedenen Lichtwellenlängenbereichen angestrahlter Markierungs-Retroreflektor weiterhin mit einem pixel- bzw. zeilenscharfen Muster ab, welches durch sein unterschiedliches Reflexionsvermögen in den emittierten Lichtwellenlängenbereichen verursacht wird.

Vorteilhafterweise muß nur ein kleiner Teil eines Retroreflektors im Bild erscheinen, da nicht die Form der Markierung, sondern deren Reflexionseigenschaften in den emittierten Lichtwellenlängenbereichen ausgewertet wird. Eine Teilverdeckung der Markierung verschlechtert die Erkenungssicherheit nicht, so lange ein Retroreflektor mit einer Mindestzahl von Pixeln auf dem Bildsensor abgebildet ist.

Damit sich die gewünschten Muster im Bild abzeichnen, darf die Belichtungszeit der photoelektrischen Elemente eines Bildsensors nicht größer sein, als die Beleuchtungszeit der Szene. Um dies gewährleisten zu können, wird der Pixeltakt respektive die Zeilen- oder Bildwiederholfrequenz des Bildsensors abweichend zu herkömmlichen Standards stark herabgesetzt. Um trotzdem eine möglichst hohe Bildwiederholrate bzw. Erkennungsgeschwindigkeit zu erzielen, wird der Pixeltakt des Bildsensors, wenn der als nächstes zu belichtende und/oder auszulesende Pixel in einem anwendungsbedingt uninteressanten Bildbereich(31) liegt, auf einen Maximalwert erhöht und dieser Bereich unter Inkaufnahme einer Unterbelichtung möglichst schnell ausgelesen. Erreicht der Pixelzähler, dessen Zählwert einen gerade belichteten und/oder ausgelesenen Bildpunkt angibt, wieder einen interessanten Bildbereich, wird der Pixeltakt erneut so herabgesetzt, daß die photoelektrischen Elemente des Bildsensors genügend lange belichtet werden und das relativ schwache retroreflektierte Licht der passiven Markierung sich im gerade ausgelesenen Bildbereich abzeichnet. Auf diese Art lassen sich vorteilhafterweise auch preiswerte Bildsensoren aus dem Multimediabereich einsetzen.

Ein weiteres wesentliches Merkmal der Erfindung ist die Möglichkeit, daß aktive moduliertes Licht abstrahlende Markierungen sich bei unscharf gestelltem Objektiv im Bild anhand ihres im Gegensatz zur natürlichen Umgebung scharfen Abbildes leicht identifizieren lassen. Das Helligkeitsmuster im Abbild des Lichtsenders gibt hierbei Auskunft über die abgestrahlte zeitliche Signalkodierung der aktiven Markierung.

Die gleichzeitige Nutzung der Vorrichtung zur Erkennung aktiver und passiver Markierungen ist insbesondere dann von Vorteil, wenn einerseits Personen mit einer Markierung ohne Energiequelle ausgestattet werden sollen und andererseits Fahrzeuge für die Versorgung einer aktiven Markierung auf das Bordnetz zurückgreifen können. Außerdem können Fahrzeuge dann sowohl die Position als auch die Art einer Gefahr als Warnung weitergeben. Ein Beispiel hierfür sei die Warnung vor Kindern, die durch parkende Autos am Straßenrand verdeckt werden.

Erfordert eine Anwendung nur die Erkennung retroreflektierender Flächen ohne Unterscheidung von Reflexionseigenschaften in verschiedenen Lichtwellenlängenbreichen (z.B. die Detektion von Fahrzeugen anhand von retroreflektierenden Nummernschildern), brauchen nur Lichtimpulse einer Wellenlänge von der Dauer ganzzahliger Vielfache der Pixel- oder Zeilenabtastzeit ausgestrahlt werden. Die gesuchten Retroreflektoren werden anhand der pixel- oder zeilenscharfen Helligkeitssprünge in Verbindung mit einem unscharf gestellten Objektiv identifiziert. Die Erkennungssicherheit kann durch Prüfung auf Wiederholungen der durch Retroreflektoren hevorgerufenen Hell-Dunkel-Muster im Bild weiter erhöht werden.

Die Erfindung soll nachfolgend in Ausführungsbeispielen anhand der zugehörigen Zeichnungen erläutert werden.

Es zeigen:

Fig. 1 das Blockschaltbild der Vorrichtung;
Fig. 2 den zeitlichen Ablauf einer bildzeilenorientierten Strahleransteuerung;
Fig. 3 die Abbildung einer passiven Markierung auf dem Bildsensor;
Fig. 4 den Einsatz eines zylindrischen Spiegels zur vertikalen Dehnung einer Markierung auf dem Bildsensor;
Fig. 5 die vertikal gedehnte Abbildung einer passiven Markierung auf dem Bildsensor;
Fig. 6 die Abbildung einer aktiven Markierung mit zeitlich kodiertem Lichtsignal auf dem Bildsensor;
Fig. 7 ein Anwendungsbeispiel für die Warnung von Autofahrern vor Personen, die von parkenden Fahrzeugen verdeckt werden;
Fig. 8 die zeitliche Abfolge einer zeilenweise alternierenden Lichtempfindlichkeitsvariation des Bildsensors;
Fig. 9 das Bildsensorabbild eines Retroreflektors, dessen Beschichtung zu einem unterschiedlichen Reflexionsvermögen bei den emittierten Lichtwellenlängenbereichen führt, und eines normalen Retroreflektors ohne diese Beschichtung.

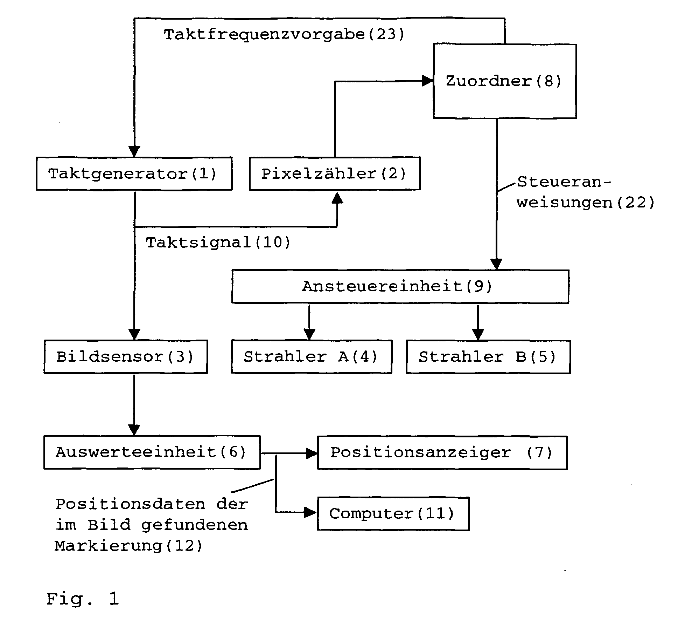

Fig. 1 zeigt das Blockschaltbild der Vorrichtung. Der Taktgenerator(1) versorgt einen Pixelzähler(2) und einen Bildsensor(3) mit einem Taktsignal(10). Synchron zum Takt des Taktsignals(10) wird der Grau- oder Farbwert eines Bildpixels vom Bildsensor(3) an die Auswerteeinheit(6) geliefert und der Zählwert des Pixelzählers(2) verändert. Der Zuordner(8) gibt in Abhängigkeit vom Zählwert des Pixelzählers(2) dem Taktgenerator(1) die einzustellende Taktfrequenz des Taktsignals(10) vor und weist die Ansteuereinheit(9) an, den Strahler A(4) oder den Strahler B(5) oder keinen von beiden zu aktivieren. Die Zählwerte des Pixelzählers(2) repräsentieren die Bildpositionen von gerade belichteten Pixeln auf dem Bildsensor(3), deren Grau- oder Farbwerte an die Auswerteeinheit(6) übergeben werden. Der Zuordner(8) ermöglicht einen Wechsel der Taktfrequenz, wobei eine Verringerung der Taktfrequenz die Lichtempfindlichkeit des Bildsensors(3) steigert. Durch eine Erhöhung der Taktfrequenz können dagegen uninteressante Bildbereiche(31) unter Inkaufnahme einer Unterbelichtung schneller durchlaufen und die Bildwiederholfrequenz maximiert werden.

Die Auswerteeinheit(6) erkennt die Position der Markierung anhand von Mustern in den vom Bildsensor(3) gelieferten Grau- oder Farbwertdaten mittels eines weiter unten beschriebenen Algorithmus und bringt sie über einen Positionsanzeiger(7) zur Anzeige. In einem einfachen Fall ist der Positionsanzeiger(7) als eine Kette von aneinandergereihten Leuchten ausgeführt, die z.B. in die Windschutzscheibe eines Fahrzeugs eingespiegelt werden. Für andere Anwendungen ist jedoch auch die Weiterverarbeitung der Positionsdaten der im Bild gefundenen Markierung(12) und ggf. die Bedeutung der zeitlichen Signalkodierung einer aktiven Markierung auf einem Computer(11) möglich.

Liefert der Bildsensor(3) ein Zeilenendesignal(61), kann an die Stelle des Pixelzählers(2) auch ein Bildzeilenzähler treten, dessen Zählerstände vom Zuordner(8) zur Taktumschaltung und Strahleransteuerung herangezogen werden. Überschreitet der Zählwert des Pixelzählers(2) die Anzahl der Pixel im Bild, wird er auf den Anfangswert zurückgesetzt. Im Falle eines Bildzeilenzählers wird analog dazu verfahren.

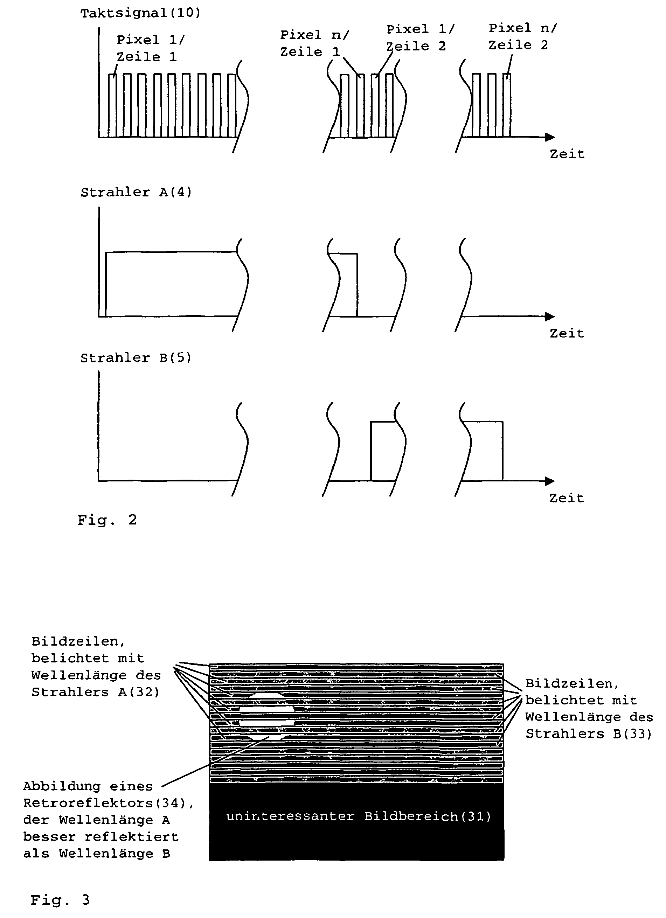

Fig. 2 zeigt ein beispielhaftes Ablaufschema für die Aktivierung der Strahler A(4) und B(5), welche verschiedene Lichtwellenlängenbereiche emittieren. Hier wird der Strahler A für die Dauer der ersten aus n Pixeln bestehenden Bildzeile eingeschaltet und der Strahler B ausgeschaltet. Für die Dauer der zweiten aus n Pixeln bestehenden Bildzeile wird Strahler A ausgeschaltet und Strahler B eingeschaltet. Diese Abfolge wiederholt sich bis zur letzten Bildzeile, so daß bei vorhandener Markierung Pixel der geradzahligen Bildzeilen mit dem retroreflektierten Licht der Wellenlänge des Strahlers B(33) und Pixel der ungeradzahligen Bildzeilen mit dem retroreflektierten Licht der Wellenlänge des Strahlers A(32) belichtet werden.

Fig. 3 zeigt, wie sich ein Retroreflektor(34), der die von den Strahlern emittierten Lichtwellenlängenbereiche unterschiedlich stark reflektiert, unter Verwendung des Ablaufschemas nach Fig. 2 auf dem Bildsensor(3) abzeichnet. Ein mit einer hohen Taktfrequenz abgetasteter Bildbereich(31) erscheint hier auf dem Bildsensor(3) dunkel. Da der als passive Markierung dienende Retroreflektor hier den Wellenlängenbereich des Strahlers A besser reflektiert als den Wellenlängenbereich des Strahlers B, bildet er sich in den ungeradzahligen Bildzeilen(32) heller ab als in den geradzahligen Bildzeilen(33). Der gesuchte Retroreflektor läßt sich im Bild nach einer weiter unten angegebenen Suchvorschrift einfach finden.

In einer weiteren Ausführung der Erfindung können auch verschiedene, vorzugsweise benachbarte Zeilen abwechselnd mit unterschiedlichen Taktfrequenzen belichtet bzw. ausgelesen werden. Dadurch lassen sich sowohl unterschiedliche Abstrahlleistungen der Strahler A und B als auch eine mit zunehmender Lichtwellenlänge abnehmende Empfindlichkeit eines Bildsensors kompensieren.

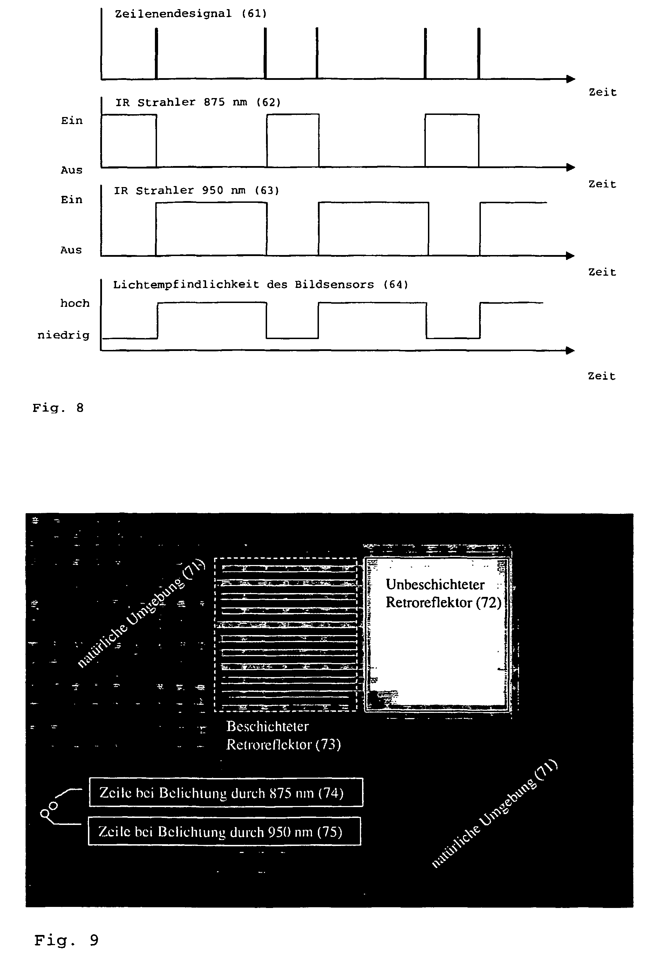

Fig. 8 verdeutlicht beispielhaft das zeitliche Zusammenspiel von zwei zeilenweise abwechselnd aktivierten Infrarotstrahlern verschiedener Lichtwellenlängenbereiche und die durch einen zeilenweise alternierenden Pixeltakt variierte Lichtempfindlichkeit des Bildsensors. Die längere Belichtungszeit bzw. größere Lichtempfindlichkeit wird genau in den Zeitintervallen realisiert, zu denen der Strahler mit genau dem Lichtwellenlängenbereich aktiv ist, in dem der Bildsensor bei gleichbleibendem Pixeltakt unempfindlicher gewesen wäre (hier 950 nm). Weiterhin soll der markierende Retroreflektor genau diesen Lichtwellenlängenbereich schlechter reflektieren. Dieses Vorgehen führt vorteilhafterweise dazu, daß sich an der Stelle im Bild, wo sich ein Retroreflektor mit diesen Eigenschaften befindet, die Phasenlage des durch die zeilenweise variierte Lichtempfindlichkeit entstehenden Hell-Dunkel-Streifenmusters auf dem Bildsensor umkehrt. Das heißt, in natürlicher Umgebung dunkler als ihre beiden Nachbarn erscheinende Bildzeilen werden in einem Abschnitt, wo sich ein Markierungs-Retroreflektor abbildet, heller als ihre beiden Nachbarbildzeilen (Fig. 9). Das erfindungsgemäße Verfahren vereinfacht den Suchalgorithmus zum Auffinden eines Markierungs-Retroreflektors in vorteilhafter Weise. Der Algorithmus muss lediglich Bildzeilen $i$ und Bildspalten $j$ finden, deren Helligkeitswerte $a_{ij}$ die folgenden Bedingungen erfüllen:

$$(a_{ij} - a_{(i-1)j} > \Delta \text{ , für } i > 1) \wedge$$

$$(a_{ij} - a_{(i+1)j} > \Delta \text{ , für } i \leq m-1),$$

mit $0 < i < m$,
mod(i,2) = 1 oder mod(i, 2) = 0, je nachdem, welcher Strahler in der ersten Bildzeile aktiviert wird

Wegen der auftretenden Phasenumkehr kann der Schwellwert $\Delta$ vorteilhafterweise klein gewählt werden, was die zur Identifikation erforderliche Lichtabstrahlleistung verringert bzw. die Erkennungsreichweite erhöht. Anhand welcher Phasenlage des Hell-Dunkel-Musters der Suchalgorithmus einen Markierungs-Retroreflektor erkennen soll, hängt bei durchgängig alternierender Betriebsweise nach Fig. 8 davon ab, welcher Strahler in der ersten Bildzeile aktiviert wird.

Werden Strahler und ggf. Lichtempfindlichkeit alternierend im Pixeltakt gesteuert, erscheint das Hell-Dunkel-Muster in den Bildzeilen. Der Suchalgorithmus operiert hier entlang der Bildzeilen, wobei sich die auszuwertende Phasenlage auf den jeweils ersten Pixel einer Bildzeile bezieht.

In Erweiterung des Verfahrens kann das Muster der Strahleraktivierung ggf. zusammen mit der Manipulation der Lichtempfindlichkeit des Bildsensors im Pixel- oder Zeilentakt frei gestaltet werden, worauf der Suchalgorithmus abzustimmen ist.

In einer weiteren Ausgestaltung der Erfindung können die zu identifizierenden Retroreflektoren auch mit mehr als zwei Lichtwellenlängenbereichen alternierend angestrahlt und abgeprüft werden.

Für einige Anwendungen u.a. in der Straßenverkehrstechnik genügt es mitunter, nur die horizontale Position der markierten Objekte zu ermitteln. Um die Bildwiederholrate bzw. die Erkennungsgeschwindigkeit weiter zu erhöhen, kann vorteilhafterweise eine zylindrische Optik in Form eines zylindrischen Spiegels oder einer zylindrischen Linse zum Einsatz kommen, die das Abbild der Markierung in vertikaler Richtung vergrößert und in horizontaler Richtung unverändert läßt. Dies führt vorteilhafterweise dazu, daß die Markierungen auf dem Bildsensor weitgehend unabhängig von ihrer vertikalen Position und Größe im Bild als Streifen großer vertikaler Ausdehnung erscheinen, auf denen das Beleuchtungsmuster bzw. der zeitliche Lichtsignalcode von aktiven Markierungen scharf abgegrenzt zu erkennen ist. Somit kann der Bildausschnitt, der zum Erreichen einer genügend großen Lichtempfindlichkeit des Bildsensors mit einem langsamen Pixeltakt abgetastet werden muß, weiter verkleinert und die Bildwiederholfrequenz bzw. die Erkennungsgeschwindigkeit weiter erhöht werden. Außerdem kann der Abstand zur Markierung größer bzw. die Markierung selbst kleiner sein, ohne daß der horizontale Öffnungswinkel durch die Verwendung eines herkömmlichen Teleobjektivs eingeengt werden muß.

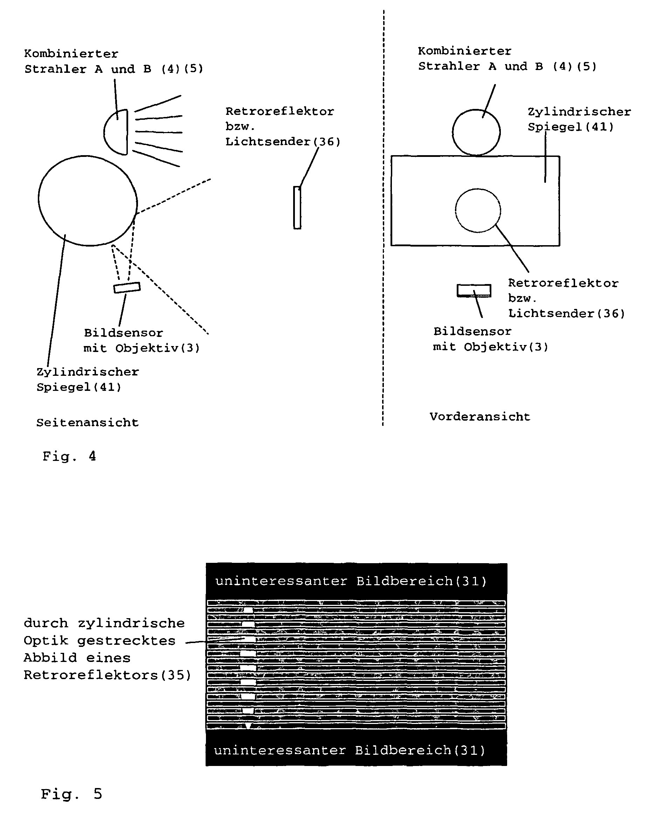

Fig. 4 zeigt hierzu eine räumliche Anordnung der zylindrischen Optik, hier in Form eines zylindrischen Spiegels (41), über den eine vertikale Vergrößerung des Abbildes des Retroreflektors bzw. Lichtsenders(36) im Bildsensor(3) realisiert wird.

Fig. 5 zeigt das durch eine zylindrische Optik gestreckte Abbild eines kreisrunden Retroreflektors(35). Hier wird auch deutlich, daß eine Identifikation und Positionsbestimmung der Markierung sich in vorteilhafter Weise durch einen relativ einfachen Algorithmus zur Erkennung von vertikalen Streifenmustern im Bild realisieren läßt. Eine vertikale Vergrößerung der Markierung durch eine zylindrische Optik erhöht in vorteilhafter Weise die Erkennungssicherheit bei der Identifikation des vertikalen Streifenmusters auch bei weiter entfernten bzw. kleineren Markierungen.

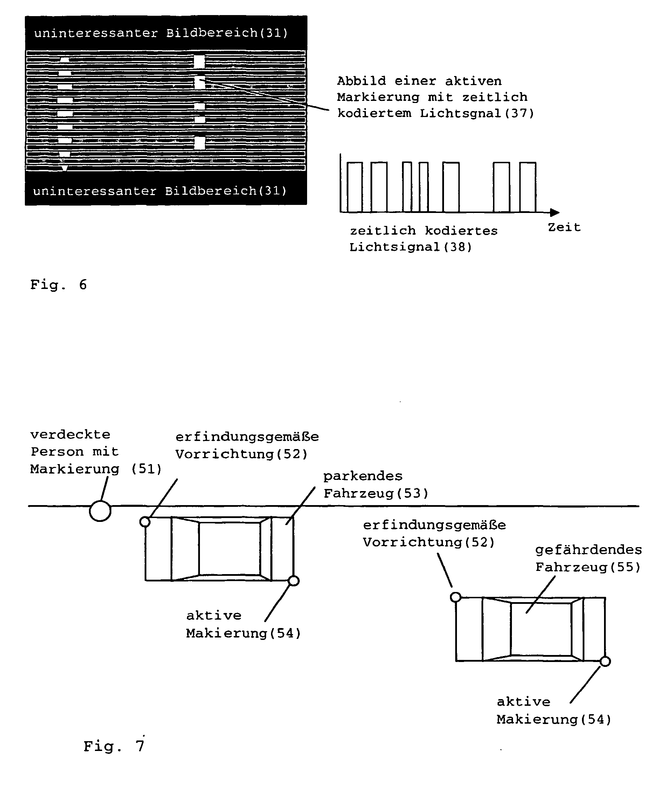

Fig. 6 verdeutlicht, wie sich ein zeitlich kodiertes Lichtsignal bei einer der Bildzeilenfrequenz entsprechenden Codetaktgrundfrequenz als Strichcode abbildet und interpretiert werden kann. Hierzu ermittelt ein Algorithmus die Grau- oder Farbwertdifferenz von in Spalten benachbarten Pixeln. Bei Überschreitung einer festgelegten Differenz, die bei unscharf eingestellter Optik im Abbild der natürlichen Umgebung zwischen benachbarten Pixeln nicht auftritt, geht der Algorithmus von der Existenz eines Lichtsenders aus und ermittelt dessen Position und den abgestrahlten Code senkrecht zu den Bildzeilen. Analog hierzu erscheint ein im Pixeltakt zeitlich kodiertes Lichtsignal als Strichcode längs zu den Bildzeilen.

Fig. 7 zeigt schließlich einen Anwendungsfall, bei dem die Möglichkeit der gleichzeitigen Identifikation und Positionsbestimmung von passiven und aktiven Markierungen vorteilhaft ausgenutzt wird.

Eine durch das parkende Fahrzeug(53) verdeckte Person(51) ist mit einer passiven Markierung ausgerüstet. Das verdeckende parkende Fahrzeug(53) identifiziert mit der erfindungsgemäßen Vorrichtung(52) die verdeckte Person (51) und sendet über Strahler als aktive Markierung(54) zeitlich kodierte Lichtsignale(38) aus, die von der erfindungsgemäßen Vorrichtung(52) an einem sich nähernden gefährdenden Fahrzeug(55) als Warnung vor verdeckten Personen identifiziert werden. Daraufhin kann der Fahrer des gefährdenden Fahrzeugs(55) mit einem Richtungshinweis des Positionsanzeigers (7) der erfindungsgemäßen Vorrichtung auf die Gefahrensituation und -stelle aufmerksam gemacht werden.

Anstatt an parkenden Fahrzeugen kann die erfindungsgemäße Vorrichtung einschließlich der aktiven Markierung analog auch an anderen unübersichtlichen Stellen zum Hinweis auf verdeckte Markierungen zum Einsatz.kommen.

Wird eine aktive oder passive Markierung in geringer Höhe über der Straßenoberfläche plaziert, z.B. an Schuhen von Fußgängern, können diese anhand der unter einem Fahrzeug sichtbar werdenden Markierung erkannt werden, auch wenn das Fahrzeug den Fußgänger verdeckt.

Eine weitere vorteilhafte Eigenschaft der Erfindung besteht darin, daß sich auch Markierungen mit vorzugsweise periodisch veränderlichen Reflexionseigenschaften anhand des Helligkeitsmusters in ihrem Abbild auf dem Bildsensor leicht identifizieren lassen.

**Patentansprüche**

1. Vorrichtung zur Erkennung mindestens einer Markierung mit einer Einrichtung zur Erfassung einer von der Markierung emittierten oder reflektierten Strahlung und einer mit der Erfassungseinrichtung verbundenen Auswerteeinrichtung

**dadurch gekennzeichnet, dass**

- die Erfassungseinrichtung als Bildsensor (3) mit unscharf eingestelltem Objektiv ausgebildet ist, das ein unscharfes Abbild der natürlichen Umgebung erzeugt,
- der Bildsensor (3) mit einem Taktgenerator (1) zum pixelweisen Auslesen des vom Bildsensor gelieferten Grau- oder Farbwertes an die Auswerteeinrichtung (6) entsprechend dem erzeugten Taktsignal verbunden ist,
- die Auswerteeinrichtung einen Algorithmus zum Erkennen eines durch entsprechend dem Taktsignal oder einem Vielfachen davon wechselnde Strahlungsemissionen oder -reflexionen zumindest stellenweise entstehenden scharfen Musters der Markierung auf dem Bildsensor (3) aufweist.

2. Vorrichtung nach Anspruch 1, **dadurch gekennzeichnet, dass**

- die Markierung als Retroreflektor ausgebildet ist,
- der Taktgenerator (1) mit einem Zähler(2) zum Zählen der Takte des Taktsignals verbunden ist, wobei der jeweilige Zählwert der Bildposition des gerade ausgelesenen Pixels entspricht,
- eine Steuereinrichtung (8) mit dem Zähler (2) verbunden ist und abhängig vom Zählwert eine Strahlereinrichtung (4, 5, 9) ansteuert, welche einen oder mehrere Lichtstrahler (4, 5) aufweist.

3. Vorrichtung nach Anspruch 2, **dadurch gekennzeichnet, dass**

- die Retroreflektoren derart ausgebildet sind, dass sie mindestens zwei unterschiedliche Wellenlängenbereiche unterschiedlich stark reflektieren und
- dass mindestens zwei Lichtstrahler (4, 5) zur Erzeugung von Lichtstrahlung in den unterschiedlichen Wellenlängenbereichen oder ein Lichtstrahler, der unabhängig voneinander mehrere Lichtwellenlängenbereiche emittiert, vorgesehen sind, wobei die Steuereinrichtung (8) abhängig vom Zählwert den einen oder den anderen oder keinen Lichtstrahler aktiviert.

4. Vorrichtung nach Anspruch 1, **dadurch gekennzeichnet, dass** die Markierung als mindestens ein Lichtstrahler ausgebildet ist, welcher zeitlich kodierte Signale mit einer der Bildzeilenfrequenz oder der Pixeltaktfrequenz entsprechenden Codetaktgrundfrequenz emittiert.

5. Vorrichtung nach einem der Ansprüche 1 bis 3, **dadurch gekennzeichnet, dass** die Markierung als mindestens ein Retroreflektor ausgebildet ist, welcher entsprechend eines Signalcodes seine Reflexionseigenschaften verändert.

6. Vorrichtung nach Ansprüchen 4 und 5, **dadurch gekennzeichnet, dass** die Auswerteeinrichtung einen Algorithmus zur Erkennung des Signalcodes anhand des Musters der Markierung auf dem Bildsensor aufweist.

7. Vorrichtung nach einem der Ansprüche 1 bis 6 **dadurch gekennzeichnet, dass** die Steuereinrichtung (8) mit dem Taktgenerator (1) verbunden ist und ausgebildet ist, abhängig vom Zählwert des Zählers (2) die Taktfrequenz des Taktgenerators (1) zu ändern.

8. Vorrichtung nach Anspruch 7, **dadurch gekennzeichnet, dass** jeweils mindestens ein Zählwert zur Festlegung von uninteressanten Bildbereichen und/oder zur Einstellung von wechselnden Belichtungszeiten vorgebbar ist.

9. Vorrichtung nach einem der Ansprüche 1 bis 8, **dadurch gekennzeichnet, daß** vor dem Bildsensor eine zylindrische Optik (41) in Form eines zylindrischen Spiegels oder einer zylindrischen Linse so angeordnet ist, dass das Abbild der Markierung auf dem Bildsensor (3) vertikal zu den Bildzeilen gestreckt erscheint.

10. Verfahren zur Erkennung mindestens einer Markierung, die Strahlung emittiert oder reflektiert, wobei die Strahlung von einer Erfassungseinrichtung erfaßt wird und anschließend ausgewertet wird, **dadurch gekennzeichnet, dass**

- die natürliche Umgebung als unscharfes Abbild projiziert und von der als Bildsensor ausgebildeten Erfassungseinrichtung erfaßt wird,
- der Bildsensor entsprechend einem vorgegebenen Takt pixelweise abgetastet wird, wobei die Strahlung zur Erzeugung von zeitlichen Hell- und Dunkelphasen entsprechend dem Takt oder einem Vielfachen davon emittiert oder reflektiert wird, wodurch auf dem Bildsensor ein zumindest stellenweise scharf abgegrenzt erscheinendes, die Markierung angebendes Hell-Dunkel-Muster erzeugt wird,
- die Grau- oder Farbwertdifferenzen von Pixeln mittels eines Auswertealgorithmus berechnet werden, und
- die Position der Markierung durch Überschreiten eines vorgegebenen Differenz-Schwellenwertes bestimmt wird.

11. Verfahren nach Anspruch 10, **dadurch gekennzeichnet, dass** die Grau- und Farbwertdifferenzen

- bei senkrecht zu den Bildzeilen erscheinenden Hell-Dunkel-Mustern zwischen den in Bildspalten benachbarten Pixeln, und
- bei längs zu den Bildzeilen erscheinenden Hell-Dunkel-Mustern zwischen den in Bildzeilen benachbarten Pixeln unter Verwendung des Auswertealgorithmus bestimmt werden.

12. Verfahren nach Anspruch 10, **dadurch gekennzeichnet, dass** die Hell- und Dunkelphasen durch zeitlich kodierte Lichtimpulse mit einer der Bildzeilen- oder Pixeltaktfrequenz entsprechenden Codetaktgrundfrequenz erzeugt werden.

13. Verfahren nach Anspruch 10, **dadurch gekennzeichnet, dass** die Hell- und Dunkelphasen durch eine Markierung mit wechselnden Reflexionseigenschaften erzeugt werden.

14. Verfahren nach den Ansprüchen 12 und 13 **dadurch gekennzeichnet, dass** in der Markierungsposition durch das Hell-Dunkel-Muster eine zeitliche Kodierung des Lichtsignals oder der sich ändernden Reflexionseigenschaften der Markierung angegeben wird.

15. Verfahren nach Anspruch 10, **dadurch gekennzeichnet, dass** die zeitlichen Hell- und Dunkelphasen durch einen Retroreflektor erzeugt werden, der im Takt der Pixelabtastung oder einem Vielfachen davon abwechselnd angestrahlt und nicht angestrahlt wird.

16. Verfahren nach Anspruch 10, **dadurch gekennzeichnet, dass** die zeitlichen Hell- und Dunkelphasen durch einen Retroreflektor erzeugt werden, der mindestens zwei Lichtwellenlängenbereiche unterschiedlich stark reflektiert und im Takt der Pixelabtastung oder einem Vielfachen davon abwechselnd oder nach einem vorgegebenen Schema mit mindestens zwei Lichtwellenlängenbereichen angestrahlt wird.

17. Verfahren nach Anspruch 16, **dadurch gekennzeichnet, dass**

- bei Anstrahlung des Retroreflektors mit Licht des einen Wellenlängenbereichs die Lichtempfindlichkeit zu der bei Anstrahlung des Retroreflektors mit Licht des anderen Wellenlängenbereichs geändert wird, und
- die Position des Retroreflektors mittels des Auswertealgorithmus **dadurch** bestimmt wird, dass an der Stelle, wo sich der Retroreflektor auf dem Bildsensor abbildet, das entstandene Hell-Dunkel-Muster sich in einer Phasenlage befindet, die sich von der Phasenlage des Hell-Dunkel-Musters der übrigen Bildbereiche unterscheidet.

18. Verfahren nach Anspruch 10, **dadurch gekennzeichnet, dass** die Bildwiederholrate erhöht wird, indem uninteressante Bildbereiche durch eine temporäre Erhöhung der Abtasttaktfrequenz des Bildsensors unter Inkaufnahme einer Unterbelichtung ausgeblendet werden.

19. Verwendung der Vorrichtung nach einem der Ansprüche 1 bis 9 zur Erkennung von verdeckten Personen, die mit der Markierung ausgerüstet sind, durch Fahrzeuge, die mit der Vorrichtung ausgerüstet sind.

20. Verwendung nach Anspruch 19, **dadurch gekennzeichnet, dass** eine Markierung in geringer Höhe über dem Boden, vorzugsweise an Schuhen von Fußgängern angebracht ist, derart, dass eine von einem Fahrzeug verdeckte Person anhand der Sichtverbindung unter dem Fahrzeug hindurch identifizierbar ist.

21. Verwendung nach Anspruch 19 zur Erkennung einer von einem verdeckenden Fahrzeug verdeckten Person, die mit der Markierung ausgerüstet ist, durch ein sich näherndes Fahrzeug, wobei das verdeckende und das sich nähernde Fahrzeug die Vorrichtung enthalten und wobei das verdeckende Fahrzeug die verdeckte Person durch Erkennen der angebrachten Markierung identifiziert und über Lichtstrahler als aktive Markierung zeitlich kodierte Lichtsignale aussendet, die von dem sich nähernden Fahrzeug erkannt und als Gefahrenstelle identifiziert werden.

**Claims**

1.  Device for recognition of at least one marker with a means for recording radiation emitted or reflected by the marker, and an evaluation unit connected with the recognition device, **characterised in that**

    - the recognition device takes the form of an image sensor (3) with an unfocused lens, which creates an unfocused image of the natural surroundings,
    - the image sensor (3) is connected with a pulse generator (1) for the pixel recognition of the grey or colour value supplied by the image sensor to the evaluating means (6) according to the pulse signal generated,
    - the evaluating means comprises an algorithm for recognition of a focused pattern of the marker on the image sensor (3) created according to the pulse signal or a multiple of the same due to changing radiation emissions or reflections at least in places.

2.  Device according to Claim 1, **characterised in that**

    - the marker takes the form of a retro reflector,
    - the pulse generator (1) is connected with a counter (2) for counting the pulses of the pulse signal, whereby the relevant counter value equals the image position of the pixels just recorded,
    - a control means (8) is connected with the counter (2) and controls a radiation means (4, 5, 9) depending on the counter value, which comprises one or more light emitters (4, 5).

3.  Device according to Claim 2, **characterised in that**

    - the retro reflectors are formed in such a way that the same reflect at least two different wavelength areas with a different strength and
    - that at least two light emitters (4, 5) are envisaged for emitting light within the different wavelength areas, or one light emitter, which the same emitting several lightwave length areas independently from each other, whereby the control means (8) activates one or the other, or none of the light emitters depending on the counter value.

4.  Device according to Claim 1, **characterised in that** the marker takes the form of at least one light emitter, which emits time coded signals with code pulse base frequency equalling the image line frequency or the pixel pulse frequency.

5.  Device according to one of the Claims 1 to 3, **characterised in that** the marker takes the form of at least one retro reflector, which changes its reflection characteristics according to a signal code.

6.  Device according to Claims 4 and 5, **characterised in that** the evaluating means comprises an algorithm for recognition of the signal code by means of the pattern of the marker on the image sensor.

7.  Device according to one of the Claims 1 to 6, **characterised in that** the control means (8) is connected with and formed together with the pulse generator (1), and changes the pulse frequency of the pulse generator (1) depending on the counter value of the counter (2).

8.  Device according to Claim 7, **characterised in that** at least one counter value each is pre-set for the recognition of image areas of no interest and/or for adjusting changing exposure times.

9.  Device according to one of the Claims 1 to 8, **characterised in that** cylindrical optics (41) in the form of a cylindrical mirror or a cylindrical lens are positioned in front of the image sensor in such a way that the image of the marker appears vertically elongated in relation to the image lines on the image sensor.

10. Method for recognition of at least one marker emitting or reflecting radiation, whereby the radiation is recorded by a recording means and subsequently evaluated, **characterised in that**

    - the natural surroundings are projected as a non-focused image and recorded by the recording means taking the form of an image sensor,
    - the image sensor is monitored according to a pre-set pulse by individual pixel, whereby the radiation for generating tiled light and dark phases is emitted or reflected according to the pulse or a multitude of the same, so that a light/dark pattern that is focused and sharply defined at least in part, and representing the pattern, is created on the image sensor,
- the grey or colour value differences of pixels are calculated with the aid of an evaluation algorithm, and
- the position of the marker is determined by exceeding a pre-set differential limit value.

**11.** Method according to Claim 10, **characterised in that** the grey and colour value differences

- are determined between adjacent pixels in the image columns for light/dark patterns that appear vertical in relation to the image lines, and
- are determined between adjacent pixels in the image lines for light/dark patterns that appear horizontally in relation to the image lines by means of an algorithm.

**12.** Method according to Claim 10, **characterised in that** the light and dark phases are created by means of timed encoded light pulses with a code pulse base frequency equalling the image lines or pixel pulse frequency.

**13.** Method according to Claim 10, **characterised in that** the light and dark phases are created by means of a marker with changing reflection characteristics.

**14.** Method according to Claims 12 and 13, **characterised in that** a timed encoding of the light signal or the changing reflection characteristics of the marker are determined by the light/dark pattern in the marker position.

**15.** Method according to Claim 10, **characterised in that** the timed light and dark phases are created by means of a retro reflector, which is illuminated, or not illuminated according to the pulse of pixel monitoring, or a multiple of the same.

**16.** Method according to Claim 10, **characterised in that** the timed light and dark phases are created by means of a retro reflector, which reflects at least two lightwave length areas differently and is illuminated according to the pulse of the pixel monitoring or a multitude of the same, or according to a pre-set plan with at least two lightwave length areas.

**17.** Method according to Claim 16, **characterised in that**

- the light sensitivity is changed when the retro reflector is illuminated with light of one wavelength area from the one that is emitted when the retro reflector is illuminated with light from the other wavelength area, and
- the position of the retro reflector is determined by means of the evaluation algorithm by the fact that the light/dark pattern created where the retro reflector is reflected on the image sensor is located in a phase position, which is different from the phase position of the light/dark pattern of the other image areas.

**18.** Method according to Claim 10, **characterised in that** the image repetition rate is increased **in that** image areas of no interest are blended out by means of a temporary increase of the monitoring pulse frequency of the image sensor while accepting a certain underexposure.

**19.** Use of the device according to one of the Claims 1 to 9 for recognition of hidden persons equipped with the marker by vehicles equipped with the device.

**20.** Use according to Claim 19, **characterised in that** a marker is applied at low height above the floor, preferably on shoes of pedestrians, in such a way that a person hidden from a vehicle can be identified by means of the visual connection below the vehicle.

**21.** Use according to Claim 19 for recognition of a person hidden by a vehicle, whereby the former is equipped with a marker, by means of an approaching vehicle, whereby the hiding and the approaching vehicles comprise the device, and whereby the hiding vehicle identifies the hidden person by means of recognition of the applied marker and transmits timed encoded light signals as active markers by means of the light emitter, which are recognised by the approaching vehicle and identified as a hazardous location.

**Revendications**

**1.** Dispositif pour la reconnaissance d'au moins un marquage avec un dispositif pour la détection d'un rayonnement émis ou réfléchi par le marquage et d'un dispositif d'analyse relié au dispositif de détection, **caractérisé en ce que**

- le dispositif de détection est conçu comme capteur d'image (3) avec un objectif réglé de façon floue, qui génère une reproduction floue de l'environnement naturel,
- le capteur d'image (3) est relié à un générateur de rythme (1) pour la lecture pixel par pixel de la valeur de gris ou de la valeur chromatique fournie par le capteur d'image sur le dispositif d'analyse (6) en fonction du signal de rythme généré,
- le dispositif d'analyse présente un algorithme pour la reconnaissance d'un modèle net du marquage sur le capteur d'image (3), qui se forme au moins par endroits en raison d'émissions ou de réflexions de rayonnement changeant en fonction du signal de rythme ou d'un multiple de celui-ci.

2. Dispositif selon la revendication 1, **caractérisé en ce que**

- le marquage est conçu comme rétroréflecteur,
- le générateur de rythme (1) est relié à un compteur (2) pour le comptage des cycles du signal de rythme, la valeur de comptage respective correspondant à la position d'image du pixel précisément lu,
- un dispositif de commande (8) est relié au compteur (2) et active en fonction de la valeur de comptage un dispositif émetteur (4, 5, 9), qui présente un ou plusieurs émetteurs de lumière (4, 5).

3. Dispositif selon la revendication 2, **caractérisé en ce que**

- les rétroréflecteurs sont conçus de telle sorte qu'ils réfléchissent au moins deux plages de longueur d'onde différentes avec une intensité différente et
- **en ce que** sont prévus, au moins deux émetteurs de lumière (4, 5) pour générer du rayonnement lumineux dans les différentes plages de longueur d'onde, ou un émetteur de lumière, qui émet plusieurs plages de longueur d'onde de lumière indépendamment les unes des autres, le dispositif de commande (8) activant en fonction de la valeur de comptage l'un ou l'autre des émetteurs de lumière ou aucun émetteur de lumière.

4. Dispositif selon la revendication 1, **caractérisé en ce que** le marquage est conçu comme au moins un émetteur de lumière, qui émet des signaux codés dans le temps avec une fréquence de base de rythme de code correspondant à la fréquence de ligne d'image ou à la fréquence de rythme de pixel.

5. Dispositif selon l'une quelconque des revendications 1 à 3, **caractérisé en ce que** le marquage est conçu comme au moins un rétroréflecteur, qui modifie ses propriétés de réflexion en fonction de son code de signal.

6. Dispositif selon les revendications 4 et 5, **caractérisé en ce que** le dispositif d'analyse présente un algorithme pour la reconnaissance du code de signal à l'aide du modèle du marquage sur le capteur d'image.

7. Dispositif selon l'une quelconque des revendications 1 à 6, **caractérisé en ce que** le dispositif de commande (8) est relié au générateur de rythme (1) et est conçu pour modifier la fréquence de rythme du générateur de rythme (1) en fonction de la valeur de comptage du compteur (2).

8. Dispositif selon la revendication 7, **caractérisé en ce qu'**à chaque fois au moins une valeur de comptage est prédéfinissable pour la fixation de zones d'image non intéressantes et/ou pour le réglage de temps d'exposition variables.

9. Dispositif selon l'une quelconque des revendications 1 à 8, **caractérisé en ce qu'**une optique (41) cylindrique sous la forme d'un miroir cylindrique ou d'une lentille cylindrique est disposée devant le capteur d'image de telle sorte que la reproduction du marquage sur le capteur d'image (3) apparaît verticalement et étirée par rapport aux lignes d'image.

10. Procédé pour la reconnaissance d'au moins un marquage, qui émet ou réfléchit le rayonnement, le rayonnement étant enregistré par un dispositif d'enregistrement et ensuite analysé, **caractérisé en ce que**

- l'environnement naturel est projeté sous la forme d'une reproduction floue et est enregistré par le dispositif d'enregistrement conçu comme capteur d'image,
- le capteur d'image est balayé pixel par pixel en fonction d'un rythme prédéfini, le rayonnement pour générer des phases claires et des phases obscures dans le temps étant émis ou réfléchi en fonction du rythme ou d'un multiple de celui-ci, un modèle clair-obscur apparaissant avec des limites nettes au moins par endroits et indiquant le marquage étant généré sur le capteur d'image,
- les différences de gris ou de valeur chromatique des pixels sont calculées au moyen d'un algorithme d'analyse, et
- la position du marquage est déterminée par le dépassement d'une valeur seuil de différence prédéfinie.

11. Procédé selon la revendication 10, **caractérisé en ce que** les différences de gris et de valeur chromatique

- sont déterminées en utilisant l'algorithme d'analyse entre des pixels voisins dans des colonnes d'image dans le cas de modèle clair-obscur apparaissant perpendiculairement aux lignes d'image, et
- entre les pixels voisins dans des lignes d'image dans le cas de modèles clair-obscur apparaissant le long des lignes d'image.

12. Procédé selon la revendication 10, **caractérisé en ce que** les phases claires et obscures sont générées par des impulsions lumineuses codées dans le temps avec une fréquence de base de rythme de code correspondant à la fréquence de ligne d'image ou de rythme de pixel.

13. Procédé selon la revendication 10, **caractérisé en ce que** les phases claires et obscures sont générées par un marquage avec des propriétés de réflexion changeantes.

14. Procédé selon les revendications 12 et 13, **caractérisé en ce que**, dans la position de marquage, un codage dans le temps du signal lumineux ou des propriétés de réflexion variables du marquage est indiqué par le modèle clair-obscur.

15. Procédé selon la revendication 10, **caractérisé en ce que** des phases claires et obscures dans le temps sont générées par un rétroréflecteur qui est éclairé et non éclairé de façon alternative dans le cycle du balayage pixel par pixel ou d'un multiple de celui-ci.

16. Procédé selon la revendication 10, **caractérisé en ce que** les phases claires et obscures dans le temps sont générées par un rétroréflecteur, qui réfléchit avec une intensité différente au moins deux plages de longueur d'onde lumineuse et est éclairé au cours du cycle du balayage pixel par pixel ou d'un multiple de celui-ci de façon alternative ou selon un schéma prédéfini avec au moins deux plages de longueur d'onde lumineuse.

17. Procédé selon la revendication 16, **caractérisé en ce que**

- en cas d'éclairage du rétroréflecteur avec de la lumière d'une plage de longueur d'onde, la sensibilité à la lumière est modifiée par rapport à la situation avec éclairage du rétroréflecteur avec la lumière de l'autre plage de longueur d'onde, et
- la position du rétroréflecteur est déterminée au moyen de l'algorithme d'analyse par le fait que, à l'endroit où le rétroréflecteur se reproduit sur le capteur d'image, le modèle clair-obscur qui se forme se trouve dans une position de phase qui se différencie de la position de phase du modèle clair-obscur des autres zones d'image.

18. Procédé selon la revendication 10, **caractérisé en ce que** le taux de répétition d'image est augmenté par le fait que des zones d'image non intéressantes sont éliminées par une augmentation temporaire de la fréquence de rythme de balayage du capteur d'image en s'accommodant d'une sous-exposition.

19. Utilisation du dispositif selon l'une quelconque des revendications 1 à 9 pour la reconnaissance de personnes cachées, qui sont équipées avec le marquage, par des véhicules qui sont équipés avec le dispositif.

20. Utilisation selon la revendication 19, **caractérisée en ce qu'**un marquage est placé à une faible hauteur au-dessus du sol, par exemple sur des chaussures de piétons, de telle sorte qu'une personne masquée par un véhicule peut être identifiée à l'aide de la liaison visuelle au-dessous du véhicule.

21. Utilisation selon la revendication 19 pour identifier une personne masquée par un véhicule masquant, qui est équipée du marquage, par un véhicule qui se rapproche, le véhicule masquant et le véhicule identifiant contenant le dispositif et le véhicule masquant identifiant la personne masquée par la reconnaissance du marquage appliqué et émet des signaux lumineux codés dans le temps au moyen d'un émetteur de lumière sous la forme de marquage actif, lesquels signaux sont détectés par le véhicule qui se rapproche et sont identifiés comme endroit à risque.

Taktfrequenzvorgabe(23)

Zuordner(8)

Taktgenerator(1)    Pixelzähler(2)

Steueran-
weisungen(22)

Taktsignal(10)

Ansteuereinheit(9)

Bildsensor(3)    Strahler A(4)    Strahler B(5)

Auswerteeinheit(6)    Positionsanzeiger (7)

Positionsdaten der
im Bild gefundenen
Markierung(12)

Computer(11)

Fig. 1

Taktsignal(10)

Pixel 1/
Zeile 1

Pixel n/
Zeile 1

Pixel 1/
Zeile 2

Pixel n/
Zeile 2

Zeit

Strahler A(4)

Zeit

Strahler B(5)

Zeit

Fig. 2

Bildzeilen,
belichtet mit
Wellenlänge des
Strahlers A(32)

Bildzeilen,
belichtet mit
Wellenlänge des
Strahlers B(33)

Abbildung eines
Retroreflektors(34),
der Wellenlänge A
besser reflektiert
als Wellenlänge B

uninteressanter Bildbereich(31)

Fig. 3

Kombinierter
Strahler A und B (4)(5)

Retroreflektor
bzw.
Lichtsender(36)

Bildsensor
mit Objektiv(3)

Zylindrischer
Spiegel(41)

Seitenansicht

Kombinierter
Strahler A und B (4)(5)

Zylindrischer
Spiegel(41)

Retroreflektor
bzw.
Lichtsender(36)

Bildsensor
mit Objektiv(3)

Vorderansicht

Fig. 4

durch zylindrische
Optik gestrecktes
Abbild eines
Retroreflektors(35)

uninteressanter Bildbereich(31)

uninteressanter Bildbereich(31)

Fig. 5

uninteressanter Bildbereich(31)

uninteressanter Bildbereich(31)

Abbild einer aktiven
Markierung mit zeitlich
kodiertem Lichtsgnal(37)

zeitlich kodiertes
Lichtsignal(38)

Zeit

Fig. 6

verdeckte
Person mit
Markierung (51)

erfindungsgemäße
Vorrichtung(52)

parkendes
Fahrzeug(53)

aktive
Makierung(54)

erfindungsgemäße
Vorrichtung(52)

gefährdendes
Fahrzeug(55)

aktive
Makierung(54)

Fig. 7

Zeilenendesignal (61)

Zeit

IR Strahler 875 nm (62)

Ein

Aus

Zeit

IR Strahler 950 nm (63)

Ein

Aus

Zeit

Lichtempfindlichkeit des Bildsensors (64)

hoch

niedrig

Zeit

Fig. 8

natürliche Umgebung (71)

Unbeschichteter Retroreflektor (72)

Beschichteter Retroreflektor (73)

Zeile bei Belichtung durch 875 nm (74)

Zeile bei Belichtung durch 950 nm (75)

natürliche Umgebung (71)

Fig. 9